# EUROPEAN PATENT SPECIFICATION

(11) **EP 1 585 910 B1**
(45) Date of publication and mention of the grant of the patent: **07.03.2012**
(21) Application number: 04702000.3
(22) Date of filing: 14.01.2004
(51) Int. Cl.: F16F 15/123

(54) **CLUTCH DRIVEN PLATES**
KUPPLUNGSDRUCKPLATTEN
PLAQUES ENTRAINEES PAR EMBRAYAGE

(30) Priority: 22.01.2003 GB 0301383
(43) Date of publication of application: 19.10.2005
(73) Proprietor: Automotive Products Italia S.p.A., 60030 Ancona (IT)
(72) Inventor: GALLAGHER, Paul Andrew, Ancona, 60030 Monsano (IT); CARACINI, Pietro, Spontini, Ancona, 60030 Moie di Maiolati (IT)
(74) Representative: Morrall, Roger
(86) International application number: PCT/GB2004/000112
(87) International publication number: WO 2004/065819

(56) References cited:
- DE-A- 3 832 950
- GB-A- 2 184 812
- GB-A- 2 379 725
- US-B1- 6 244 963
- US-B1- 6 446 780

## Description

This invention relates to clutch driven plates (hereinafter referred to as of the kind described) which include a hub, an outer annular friction member rotatable relative to the hub through a first angular range against the action of a first or so-called idle damper which damps small torsional vibrations which occur typically at engine idle speeds and is rotatable relative to the hub through a further second angular range against the action of a further second or main drive damper, both the idle and main drive damper including first and second respective circumferentially acting springs.

Such clutch driven plates are well known but can suffer from problems due to the lack of a smooth transition between the idle and main drive dampers.

An example of such a prior art driven plate of the kind described is shown in US 6446780. US 6446780 also discloses an idle damper which includes a first friction damping means which provides a first level of frictional resistance to relative rotation during a first portion of the first angular range of rotation and a second friction damping means which provides a second and higher level of frictional resistance during a second portion of the first angular range of rotation.

It is an object of the present invention to provide a clutch driven plate which at least mitigates the above problem.

Thus according to the present invention there is provided a clutch driven plate which includes a hub, an outer annular friction member rotatable relative to the hub through a first angular range against the action of a first or idle damper which damps small torsional vibrations which occur typically at engine idle speeds and is rotatable relative to the hub through a further second angular range against the action of a further second or main drive damper, both the idle and main drive damper including the action of a further second or main drive damper, both the idle and main drive damper including first and second respective circumferentially acting springs, the idle damper also including a first friction damping means which provides a first level of frictional resistance to relative rotation during a first portion of the first angular range of rotation (measured from an unloaded/neutral condition of the driven plate) and a second friction damping means which provides a second and higher level of frictional resistance during a second portion of the first angular range of rotation, the driven plate being characterised by the inclusion of a flange for limited circumferential rotation relative to the hub through said first angular range, a pair of axially spaced outer side plates one on each side of the flange and which support the annular friction member, the second circumferentially acting springs acting between the flange and the outer side plates to resist relative rotation between said outer side plates and said flange, a pair of axially spaced inner side plates one on each side of said flange between the flange and each respective outer side plate and connected with the flange for rotation therewith, the first circumferentially acting idle damper springs acting between the inner side plates and the hub to resist relative rotation therebetween, the first friction damping means being provided by frictional contact between a flange on the hub and one of the inner side plates and between the other inner side plate and a first axially acting spring located between the hub flange and the other inner side plate or between the first axially acting spring means and the hub flange, and the second friction damping means being provided by a friction means located axially between one outer side plate and its adjacent inner side plate and drivingly connected with the hub via a lost motion connection , the friction means being axially biased by a second axially acting spring means into contact with the adjacent outer side plate and/or another component which rotates with said adjacent outer side plate.

With such an arrangement the resistance to relative rotation increases with increasing relative rotation in the idle range giving a smoother transition to the even higher level of resistance provided in the main drive range.

Preferably the main drive damper also includes a third friction damping means which provides further frictional resistance during the main drive range of operation of the driven plate.
Preferably the third friction damping means comprises a friction member which rotates with one of the outer side plates and is axially biased into contact with an inner side plate by a third axially acting spring means.

Preferably the friction member is connected with said one outer side plate by axially extending formations thereon which engage corresponding formations on said one outer side plate.

The inner side plates may be formed from plastics material with their inwardly facing sides recessed to provide abutments for reaction with the first circumferentially acting springs.

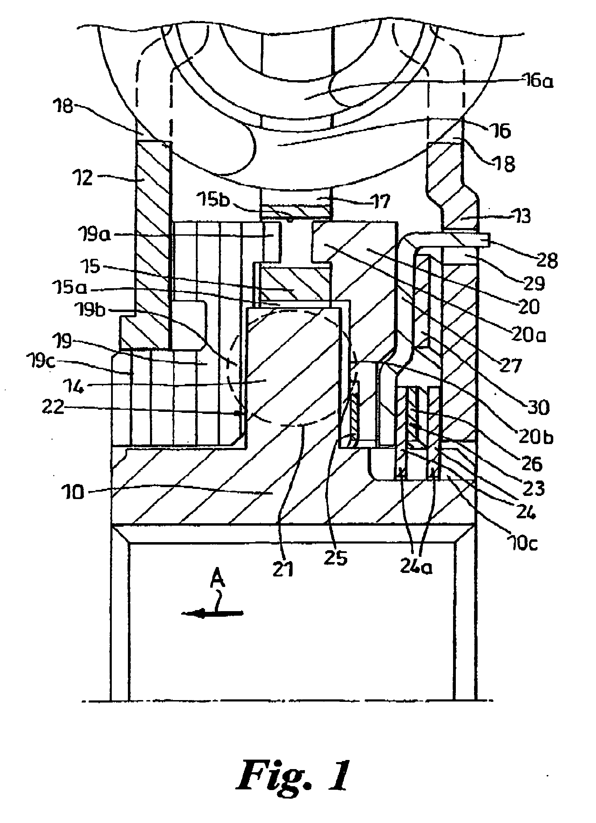

One embodiment of the present invention will now be described, by way of example only, with reference to the accompanying drawings in which:-
Figure 1 is an axial section through part of a clutch driven plate embodying the invention, and

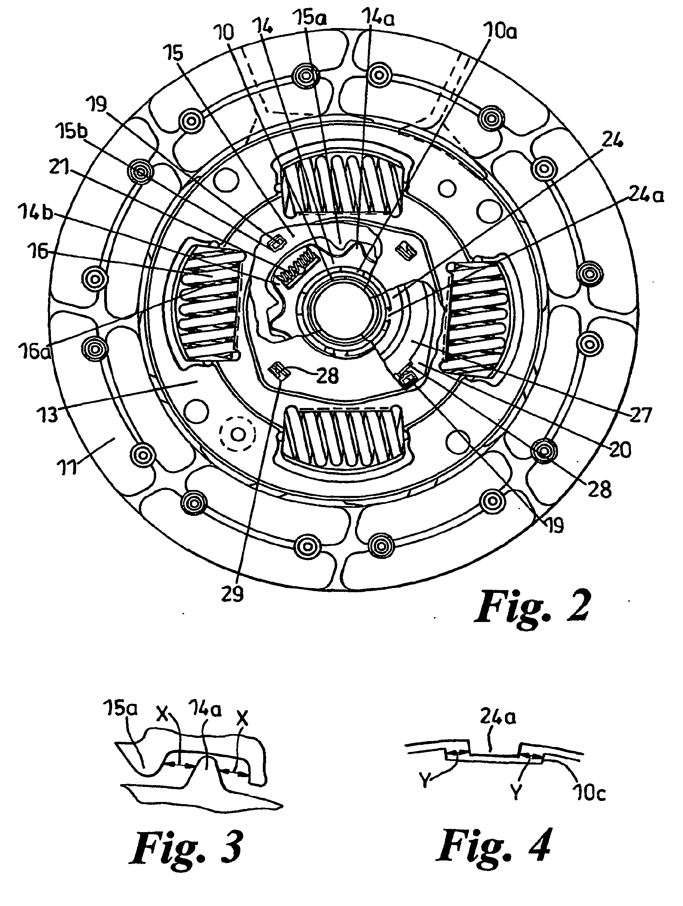

Figure 2 is a partly cutaway side view of the clutch disc of Figure 1 in the direction of arrow A, and
Figures 3 and 4 show fragmentary views of the circumferential play built into the driven plate.

Referring to the drawings, the driven plate comprises a central hub 10 on which an outer annular friction member 11 is mounted via out side plates 12 and 13. Hub 10 has a hub flange 14 with teeth 14a which engage with circumferential clearance 'X' teeth 15a formed on a support flange 15. Circumferentially action compression springs 16 and 16a engage cut-outs 17 in flange 15 and windows 18 in side plates 12 and 13 to damp the relative rotation between outer side plates 12 and 13 and flange 15 and thus constitute part of a main drive damper as explained below.

Located either side of support flange 15 are plastics inner side plates 19 and 20 which are connected to flange 15 by projections 19a and 20a which engage cut outs 15b in flange 15. Inner side plates 19 and 20 also include recesses 19b and 20b respectively which react one end of idle damper springs 21 the other ends of which are reacted against formations 14b on the hub flange 14 to resist relative rotation of the flange 15 and hence inner side plates 19 and 20 relative to hub 10 to provide part of the idle damper of the driven plate. Outer side plate 12 is supported on axially extending tubular portion 19c of inner side plate 19.

As will be appreciated, the driven plate basically operates in two angular ranges of rotation. A first or idle angular range determined by the circumferential clearance X during which friction member 11, outer side plates 12 and 13, and flange 15 rotation relative to hub 10 and a second or main drive range after teeth 14a and 15a are in contact with each other and during which friction member 11 (and hence outer side plates 12 and 13) rotate relative to support flange 15 (and hence hub 10).

During the first or idle angular range relative rotation of friction member 11 relative to hub 10 is resisted by idle springs 21 and during the second or main drive range relative rotation between friction member 11 and hub 10 is resisted by main damping springs 16 and 16a.

In accordance with the present invention the idle damper also includes first and second friction damping means 22 and 23. First friction damping means 22 acts during a first portion of the idle damper angular range of operation and second friction damping means 23 acts, in addition to first friction damping means 22, in a second and later portion of the idle damper angular range of operation.

First friction damping means 22 is constituted by the frictional contact between hub flange 14 and inner side plate 19 and between either a first axially acting wavy washer spring 25 and inner side plate 20 or between wavy washer spring 25 and hub flange 14 depending on the relative values of the coefficients of friction of the contacting components.

Second friction damping means 23 is constituted by friction plates 24 which are splined onto hub 10 at 10c. Plates 24 have drive teeth 24a respectively which engage hub splines 10c with circumferential play Y. A second axially acting wavy washer spring 26 acts between plates 24 to bias the plates into frictional contact with friction member 27 which rotates with outer side plate 13 via axial projections 28 which engage cut-out 29 in side plate 13. Friction member 27 reacts against the adjacent inner side plate 20 under the action of a third axially wavy washer spring 30 which reacts against the inside of side plate 13.

Thus when circumferential play Y is taken up (which is less than play X) plates 24 are coupled with hub 10 and friction is generated between one plate 24 and member 27 and between the other plate 24 and side plate 13. Thus during the second portion of the idle damper angular range of operation additional friction resistance is generated to the rotation of friction member 11 relative to hub 10.

When the circumferential clearance X between teeth 14a and 15a is taken up, the driven plate moves into its main drive range of relative rotation in which the relative rotation between friction member 11 and hub 10 is resisted by the main damping springs 16 and 16a and the friction member 27 begins to move rotationally relative to the adjacent inner side plate 20 to generate a main drive range frictional damping force under the action of the wavy washer spring 30.

Thus, the driven plate of the present invention provides two levels of frictional damping during the idle range and a third level of friction damping during the main drive range of the driven plate. This together with the progressive increase in the spring resistance to the relative rotation of the friction member 11 relative to the hub 10 provides a smooth transition in the overall increase of resistance to relative rotation throughout the entire operating range of the driven plate.

## Claims

1. A clutch driven plate which includes a hub (10), an outer annular friction member (11) rotatable relative to the hub through a first angular range (X) against the action of a first or idle damper (21) which damps small torsional vibrations which occur typically at engine idle speeds and is rotatable relative to the hub through a further second angular range against the action of a further second or main drive damper, both the idle and main drive damper including first (21) and second (16,16a) respective circumferentially acting springs, the idle damper also including a first friction damping means which provides a first level of frictional resistance to relative rotation during a first portion of the first angular range of rotation (measured from an unloaded/neutral condition of the driven plate) and a second friction damping means (28) which provides a second and higher level of frictional resistance during a second portion of the first angular range of rotation, the driven plate being **characterised by** the inclusion of a flange (15) for limited circumferential rotation relative to the hub (10) through said first angular range (X), a pair of axially spaced outer side plates (12,13) one on each side of the flange and which support the annular friction member (11), the second circumferentially acting springs (16,16a) acting between the flange and the outer side plates to resist relative rotation between said outer side plates and said flange, a pair of axially spaced inner side plates (19,20) one on each side of said flange (15) between the flange and each respective outer side plate (12,13) and connected with the flange for rotation therewith, the first circumferentially acting idle damper springs (21) acting between the inner side plates (19,20) and the hub (10) to resist relative rotation therebetween, the first friction damping means (22) being provided by frictional contact between a flange (14) on the hub (10) and one (19) of the inner side plates and between the other inner side plate (20) and a first axially acting spring (25) located between the hub flange and the other inner side plate or between the first axially acting spring means and the hub flange (14), and the second friction damping means (23) being provided by a friction means (24) located axially between one outer side plate (13) and its adjacent inner side plate (20) and drivingly connected with the hub via a lost motion connection (10c,24a), the friction means being axially biased by a second axially acting spring means (26) into contact with the adjacent outer side plate (13) and/or another component (27) which rotates with said adjacent outer side plate.

2. A driven plate according to claim 1 in which the main drive damper also includes a third friction damping means (20,27,30) which provides nether frictional resistance during the main drive range of operation of the driven plate.

3. A driven plate according to claim 2 in which the third friction damping means comprises a friction member (27) which rotates with one (13) of the outer side plates and is axially biased into contact with one (20) of the inner side plates by a third axially acting spring means (30).

4. A driven plate according to claim 3 in which the friction member (27) is connected with said one outer side plate (13) by axially extending formations (28) thereon which engage corresponding formations (29) on said one outer side plate.

5. A driven plate according to any one of claims 1 to 4 in which the inner side plates (19,20) are formed from plastics material with their inwardly facing sides recessed (19b,20b) to provide abutments for reaction with the first circumferentially acting springs (21).

6. A driven plate according to any one of claims 1 to 5 in which one (12) of the outer side plates is supported radially on an axially extending tubular extension (19c) formed on the adjacent inner side plate (19).

7. A driven plate according to any one of claims 1 to 6 in which the second friction damping means (24) is of the multi-plate type.

## Patentansprüche

1. Angetriebene Kupplungsscheibe, die enthält eine Nabe (10), ein äußeres ringförmiges Reibungsteil (11), das relativ zu der Nabe über einen ersten Winkelbereich (X) gegen die Wirkung eines ersten oder Leerlauf-Dämpfers (21) drehbar ist, der kleine Drehschwingungen dämpft, die typischerweise bei Motorleerlaufdrehzahlen auftreten, und relativ zu der Nabe über einen weiteren zweiten Winkelbereich gegen die Wirkung eines weiteren zweiten oder Hauptantriebs-Dämpfer drehbar ist, wobei beide, der Leerlauf- und der Hauptantriebs-Dämpfer erste (21) und zweite (16, 16a), jeweilige in Umfangsrichtung wirkende Federn aufweist, wobei der Leerlauf-Dämpfer auch ein erstes Reibungsdämpfungsmittel, das einen ersten Reibwiderstandspegel gegen eine Relativdrehung während eines ersten Abschnitts des ersten Drehwinkelbereichs (gemessen von einem unbelasteten/neutralen Zustand der angetriebenen Scheibe aus) liefert, und ein zweites Reibungsdämpfungsmittel (28) enthält, das einen zweiten und höheren Reibwiderstandspegel während eines zweiten Abschnitts des ersten Drehwinkelbereichs liefert, wobei die angetriebene Scheibe **gekennzeichnet ist durch** den Einschluss eines Flansches (15) für eine begrenzte Umfangsdrehung relativ zu der Nabe (10) über den ersten Winkelbereich (X), eines Paares axial beabstandeter äußerer Seitenscheiben (12, 13), eine auf jeder Seite des Flansches, und die das ringförmige Reibungsteil (11) tragen, wobei die zweiten in Umfangsrichtung wirkenden Federn (16, 16a) zwischen dem Flansch und den äußeren Seitenscheiben wirken, um einer Relativdrehung zwischen den äußeren Seitenscheiben und dem Flansch entgegenzuwirken, eines Paares axial beabstandeter innerer Seitenscheiben (19, 20), eine auf jeder Seite des Flansches (15) zwischen dem Flansch und jeder jeweiligen äußeren Seitenscheibe (12, 13) und die mit dem Flansch für eine Drehung mit ihm verbunden sind, wobei die ersten in Umfangsrichtung wirkenden Leerlauf-Dämpferfedern (21) zwischen den inneren Seitenscheiben (19, 20) und der Nabe (10) wirken, um einer Relativdrehung dazwischen entgegenzuwirken, wobei das erste Reibungsdämpfungsmittel (22) **durch** Reibungskontakt zwischen einem Flansch (14) an der Nabe (10) und einer (19) der inneren Seitenscheiben und zwischen der anderen inneren Seitenscheibe (20) und einer ersten axial wirkenden Feder (25), die zwischen dem Nabenflansch und der anderen inneren Seitenscheibe oder zwischen dem ersten axial wirkenden Federmittel und dem Nabenflansch (14) angeordnet ist, bereitgestellt wird, und das zweite Reibungsdämpfungsmittel (23) von einem Reibungsmittel (24) bereitgestellt wird, das axial zwischen einer äußeren Seitenscheibe (13) und ihrer angrenzenden inneren Seitenscheibe (20) angeordnet und antriebsmäßig mit der Nabe über eine Totgangverbindung (10c, 24a) verbunden ist, wobei das Reibungsmittel **durch** ein zweites axial wirkendes Federmittel (26) axial in Kontakt mit der angrenzenden äußeren Seitenscheibe (13) und/oder einem anderen Bauteil (27) vorgespannt ist, das sich mit der angrenzenden äußeren Seitenscheibe dreht.

2. Angetriebene Scheibe nach Anspruch 1, bei der der Hauptantriebs-Dämpfer auch ein drittes Reibungsdämpfungsmittel (20, 27, 30) enthält, das einen weiteren Reibwiderstand während des Hauptantriebsbetriebsbereichs der angetriebenen Scheibe liefert.

3. Angetriebene Scheibe nach Anspruch 2, bei der das dritte Reibungsdämpfungsmittel ein Reibungsteil (27) aufweist, das sich mit einer (13) der äußeren Seitenscheiben dreht und axial in Kontakt mit einer (20) der inneren Seitenscheiben durch ein drittes axial wirkendes Federmittel (30) vorgespannt wird.

4. Angetriebene Scheibe nach Anspruch 3, bei der das Reibungsteil (27) mit der einen äußeren Seitenscheibe (13) durch axial sich erstreckende Gebilde (28) daran verbunden ist, die in entsprechende Gebilde (29) an der einen äußeren Seitenscheibe eingreifen.

5. Angetriebene Scheibe nach irgend einem der Ansprüche 1 bis 4, bei der die inneren Seitenscheiben (19, 20) aus Kunststoff hergestellt sind, wobei ihre nach innen weisenden Seiten ausgespart sind (19b, 20b), um Widerlager zur Reaktion mit den ersten in Umfangsrichtung wirkenden Federn (21) bereitzustellen.

6. Angetriebene Scheibe nach irgend einem der Ansprüche 1 bis 5, bei der eine (12) der äußeren Seitenscheiben radial auf einer axial sich erstreckenden rohrförmigen Verlängerung (19c) getragen wird, die an der angrenzenden inneren Seitenscheibe (19) gebildet ist.

7. Angetriebene Scheibe nach irgend einem der Ansprüche 1 bis 6, bei der das zweite Reibungsdämpfungsmittel (24) ein Mehrscheibentyp ist.

## Revendications

1. Disque d'embrayage comprenant un moyeu (10), un élément de friction annulaire externe (11) pouvant tourner autour du moyeu sur une première plage angulaire (X) en contrant l'action d'un premier amortisseur ou amortisseur de ralenti (21) qui amortit les petites vibrations de torsion se produisant typiquement au régime de ralenti moteur et qui peut tourner autour du moyeu sur une seconde plage angulaire, en contrant l'action d'un second amortisseur ou amortisseur d'entraînement principal, l'amortisseur de ralenti et l'amortisseur d'entraînement principal comprenant tous deux des premiers (21) et seconds (16, 16a) ressorts respectifs agissant sur la périphérie, l'amortisseur de ralenti comprenant aussi un premier moyen d'amortissement de friction qui fournit un premier niveau de résistance à la friction lors de la rotation sur une première partie de la première plage angulaire de rotation (mesurée à partir d'une position à vide/neutre du disque d'embrayage) et un deuxième moyen d'amortissement de friction (28) qui fournit un second niveau, plus élevé, de résistance à la friction sur une seconde partie de la première plage angulaire de rotation, le disque d'embrayage **se caractérisant en ce qu'**il intègre un flasque (15) destiné à limiter la rotation circulaire par rapport au moyeu (10) sur ladite première plage angulaire (X), deux disques latéraux extérieurs axialement distants (12, 13) de part et d'autre du flasque et qui supportent l'élément de friction annulaire (11), les seconds ressorts agissant sur la périphérie (16, 16a) agissant entre le flasque et les disques latéraux extérieurs afin de contrer la rotation entre ces derniers et ledit flasque, deux disques latéraux intérieurs axialement distants (19, 20) de part et d'autre dudit flasque (15) entre celui-ci et chacun des disques latéraux extérieurs respectifs (12, 13) et reliés au flasque pour tourner avec lui, les premiers ressorts d'amortisseur de ralenti agissant sur la périphérie (21) agissant entre les disques latéraux intérieurs (19, 20) et le moyeu (10) afin de contrer la rotation entre eux, le premier moyen d'amortissement de friction (22) étant assuré par le frottement entre un flasque (14) présent sur le moyeu (10) et l'un (19) des disques latéraux intérieurs, et entre l'autre disque latéral intérieur (20) et un premier ressort agissant axialement (25), placé entre le flasque du moyeu et l'autre disque latéral intérieur ou entre le premier ressort agissant axialement et le flasque du moyeu (14), et le deuxième moyeu d'amortissement de friction (23) étant assuré par un moyen de friction (24) placé axialement entre l'un des disques latéraux extérieurs (13) et son disque latéral intérieur adjacent (20) et relié par entraînement au moyeu par l'intermédiaire d'une liaison à mouvement perdu (10c, 24a), le moyen de friction étant axialement incliné par un second ressort agissant axialement (26), en contact avec le disque latéral extérieur adjacent (13) et/ou un autre composant (27) qui tourne avec ledit disque latéral extérieur adjacent.

2. Disque d'embrayage selon la revendication 1, dans lequel l'amortisseur d'entraînement principal comprend aussi un troisième moyen d'amortissement de friction (20, 27, 30) qui fournit une résistance à la friction supplémentaire sur la plage d'entraînement principale du disque d'embrayage en fonctionnement.

3. Disque d'embrayage selon la revendication 2, dans lequel le troisième moyen d'amortissement de friction comprend un élément de friction (27) qui tourne avec l'un (13) des disques latéraux extérieurs et est axialement incliné, en contact avec l'un (20) des disques latéraux intérieurs, par un troisième ressort (30) agissant axialement.

4. Disque d'embrayage selon la revendication 3, dans lequel l'élément de friction (27) est relié audit disque latéral extérieur (13) par des protubérances en extension axiale (28) ménagées sur celui-ci, qui s'engagent dans des protubérances correspondantes (29) ménagées sur ledit disque latéral extérieur.

5. Disque d'embrayage selon l'une quelconque des revendications 1 à 4, dans lequel les disques latéraux intérieurs (19, 20) sont constitués de matière plastique et leur face intérieure est évidée (19b, 20b) afin de former des butées destinées à réagir avec les premiers ressorts agissant sur la périphérie (21).

6. Disque d'embrayage selon l'une quelconque des revendications 1 à 5, dans lequel l'un (12) des disques latéraux extérieurs est supporté radialement par une extension tubulaire s'étirant axialement (19c) et formée sur le disque latéral intérieur adjacent (19).

7. Disque d'embrayage selon l'une quelconque des revendications 1 à 6, dans lequel le deuxième moyen d'amortissement de friction (24) est de type multidisque.
